# FASCICULE DE BREVET EUROPEEN

(11) **EP 2 376 574 B1**
(45) Date de publication et mention de la délivrance du brevet: **27.11.2013**
(21) Numéro de dépôt: 10707106.0
(22) Date de dépôt: 12.01.2010
(51) Int. Cl.: C08L 63/00, C08L 67/00, C08L 75/04, C08K 5/09, C08J 3/28, B29C 41/08

(54) **COMPOSITION POUR LA REALISATION D'UNE PIECE PAR USINAGE, PROCEDE DE MISE EN OEUVRE ET PRODUIT OBTENU**
ZUSAMMENSETZUNG ZUR HERSTELLUNG EINES TEILS DURCH MASCHINELLE BEARBEITUNG, UMSETZUNGSVERFAHREN DAFÜR UND AUF DIESE WEISE GEWONNENES PRODUKT
COMPOSITION FOR PRODUCING A PART BY MACHINING, METHOD FOR IMPLEMENTING SAME AND PRODUCT THUS OBTAINED

(30) Priorité: 14.01.2009 FR 0950182
(43) Date de publication de la demande: 19.10.2011
(73) Titulaire: Rollais, Dominique, 78570 Andresy (FR)
(72) Inventeur: MARINELLI, Giuseppe, I-20152 Milan - Italie (IT)
(74) Mandataire: Cenatiempo, Julie Adeline Anne
(86) Numéro de dépôt international: PCT/FR2010/050040
(87) Numéro de publication internationale: WO 2010/081985

(56) Documents cités:
- EP-A- 0 717 318
- EP-A- 1 958 968
- EP-A1- 1 170 324
- US-A- 4 859 742

## Description

La présente invention concerne une composition pour la réalisation d'un modèle, d'un maître modèle ou d'un moule par usinage.

L'invention vise également l'utilisation de cette composition et un procédé de fabrication d'une pièce par usinage mettant en oeuvre cette composition.

La fabrication d'une pièce par un modeleur ou un mouliste est traditionnellement réalisée par extrusion de résine puis soumise à un usinage pour lui donner les formes requises.

Les compositions de polymères utilisées sont généralement à base de résine polyuréthane ou de résine époxyde.

Les polyuréthanes et les époxydes sont des systèmes de polymérisation à deux composants, comprenant une résine et un durcisseur permettant la polymérisation . Leur utilisation pour la fabrication de moules ou de modèles nécessite une machine devant assurer à la fois le pompage, le dosage de mélange résine/durcisseur dans un rapport défini précis, le mélange et l'extrusion. La dépose des compositions ainsi extrudées est réalisée par un opérateur.

Les systèmes polyuréthane sont des compositions, à thixotropie chimique, composées d'un polyol et d'un agent polymérisant à base d' isocyanate. Le rapport polyol/isocyanate du mélange conditionne les qualités finales du produit.

Les deux composants étant relativement liquides, ils nécessitent l'utilisation d'une machine équipée de pompes à engrenages assurant le pompage et réglées de façon à assurer le respect du rapport de mélange. Le rapport de mélange doit toutefois être régulièrement contrôlé.

Le mélange de la résine polyol et de l'agent polymérisant est obtenu par l'intermédiaire d'un mélangeur statico-dynamique, relié à la buse d'extrusion par un tuyau souple, transparent, d'une longueur d'environ deux mètres, longueur nécessaire pour déclencher la réaction chimique entraînant la thixotropie.

Les systèmes époxyde sont des compositions à thixotropie mécanique, composées d'une résine, d'un agent polymérisant et d'un agent épaississant. Comme pour les compositions polyuréthane, le rapport résine/agent polymérisant du mélange conditionne les qualités finales du produit.

Les deux composants étant pâteux, du fait de la thixotropie mécanique, ils nécessitent l'utilisation d'une machine équipée de presses pour pousser chacun des composants vers les pompes de dosage. La machine est équipée d'un mélangeur dynamique ou statico-dynamique relié à une buse d'extrusion par un tuyau transparent souple dont la longueur n'intervient pas dans la rhéologie du produit.

Néanmoins ces produits existants ne sont pas satisfaisants.

En effet, il est fréquent que le produit déposé soit de mauvaise qualité en raison d'un mauvais rapport de mélange résine/agent polymérisant lié à un déréglage de la machine.

En outre, en cas de mauvais mélange, le produit ne polymérise pas ou de façon non homogène. Or ce problème est déjà rencontré à chaque arrêt et reprise de l'extrusion car les deux composants ayant une viscosité différente il y en a toujours un qui passe dans le mélangeur avant l'autre. C'est le cas également lorsqu'une pompe se trouve obstruée par un résidu.

Par ailleurs, en cas de problème nécessitant l'arrêt de la machine, il est impératif de changer le tuyau souple et de purger la chambre de mélange puisque le produit présent dans ces deux éléments est susceptible de durcir et de bloquer la tête de mélange.

Ainsi, chaque démarrage de machine et chaque contrôle de rapport entraîne une perte importante de produit.

De même ces compositions existantes sont difficiles à appliquer si bien que l'on se retrouve avec des produits mal appliqués : surépaisseur, manque de produit ou présence de nombreuses bulles.

Le temps de polymérisation avant usinage est de l'ordre de huit à douze heures. Or, les différents problèmes pouvant intervenir ne sont observables qu'en cours ou après usinage, si bien que les interventions de réparation sont très coûteuses. Ces réparations sont généralement effectuées avec des matrices polyesters, qui posent des problèmes de qualité de surface.

Enfin, compte tenu des formulations des compositions polyuréthanes et époxydes, leur utilisation nécessite un traitement de surface complexe après usinage afin d'obtenir la brillance requise pour le tirage des moules et l'obtention d'un état de surface adapté. Un traitement de surface standard comprend l'écrêtage de la résine après usinage, l'application par pulvérisation d'un enduit polyester, le ponçage après 8 à 12 heures de séchage, l'application par pulvérisation d'un enduit polyester de finition, et enfin le ponçage et le lustrage après 8 à 12 heures de séchage de cet enduit de finition . A titre indicatif le temps de ponçage et de lustrage pour une pièce standard d'une surface de 27 m² est de l'ordre de 240 heures.

Aussi, la présente invention vise à pallier les inconvénients de l'art antérieur en proposant une composition pour l'usinage de pièces, simple à mettre en oeuvre, permettant d'obtenir une bonne qualité de produit de façon reproductible, ne nécessitant qu'un traitement de surface simple, après usinage et facilement réparable.

A cet effet, l'invention a pour objet une composition thixotrope destinée à la fabrication d'une pièce par usinage, comprenant au moins :
- une résine photopolymère, et
- un photo initiateur
ledit photo-initiateur étant présent à une concentration comprise entre 0,05 et 0,3% en poids de la composition,
caractérisée en ce qu'elle répond à l'une des trois compositions suivantes :
- composition composée :
   * de 29 à 31% en poids d'une résine thermoplastique,
   * de 29 à 31% en poids de monomères acryliques ou méthacryliques,
   * de 29 à 31% en poids d'un plastifiant,
   * de 9 à 11% en poids d'un agent épaississant, et
   * de 0,05 à 0,3% d'un photo-initiateur,
- composition composée :
   * de 37 à 39% en poids d'une résine thermoplastique,
   * de 37 à 39% en poids de monomères acryliques ou méthacryliques,
   * de 14 à 16% en poids d'un plastifiant,
   * de 8 à 10% en poids d'un agent épaississant, et
   * de 0,05 à 0,3% d'un photo-initiateur,
- composition composée :
   * de 44 à 46% en poids d'une résine thermoplastique,
   * de 44 à 46% en poids de monomères acryliques ou méthacryliques,
   * de 5 à 7% en poids d'un plastifiant,
   * de 3 à 5% en poids d'un agent épaississant, et
   * de 0,05 à 0,3% d'un photo-initiateur.

Par pièce on entend notamment tout modèle, maître modèle ou moule.

Un autre objet de l'invention est l'utilisation de cette composition pour la fabrication de pièces par usinage. En particulier l'invention se rapporte à un procédé de fabrication de pièces comprenant au moins une étape de projection de la composition sur un support, et une étape de polymérisation à l'aide d'un rayonnement UV.

Avantageusement, la composition selon l'invention est un système mono-composant réticulable aux rayons ultra violets et applicable en projection en épaisseur jusqu'à 10 millimètres pour fabriquer des modèles, maître modèles ou moules. La composition peut également être appliquée par extrusion, pour des raisons techniques ou propres à l'opérateur.

D'autres caractéristiques et avantages ressortiront de la description en détail qui va suivre de l'invention.

L'invention vise donc une composition thixotrope destinée à la fabrication d'une pièce par usinage, comprenant au moins :
- une résine photopolymère, et
- un photo initiateur.

Par « résine photopolymère » on entend toute résine réticulable aux UV. Préférentiellement, la résine photopolymère est choisie parmi des systèmes époxy, polyester et/ou polyuréthane.

Par « photo initiateur » on entend tout composé qui, sous l'action d'une irradiation UV, initie une réaction de polymérisation de la résine photopolymère.

Le photo initiateur est présent dans la composition à une concentration comprise entre 0,05 et 0,3%. Cette faible proportion permet d'obtenir une réticulation jusqu'à 10 millimètres d'épaisseur.

Par « plastifiant » on entend tout agent permettant d'améliorer la fluidité de la composition. A titre d'exemple, le plastifiant est du dioctyladipate ou du dibutylphtalate.

L'agent épaississant peut être par exemple de type silice colloïdale ou cellulose. A titre d'exemple, le photo initiateur peut être choisi parmi le benzildimethylketal ou l'oxyde phosphine.

La composition selon l'invention peut également contenir une résine époxy qui permet d'augmenter les caractéristiques mécaniques en particulier la dureté et/ou une résine polyester.

Préférentiellement la composition selon l'invention est constituée de :
- 80% en poids, d'une composition de base comprenant au moins une résine thermoplastique, une résine ou un monomère acrylique ou méthacrylique, un plastifiant, un agent épaississant, un photo initiateur, et éventuellement une résine époxy et/ou polyester, et
- 20% en poids, de résine polyuréthane.

La présence de 20% de résine polyuréthane permet d'augmenter l'élasticité.

La composition selon l'invention se présente sous forme thixotrope. Elle est destinée à être pulvérisée sur un support afin d'être ensuite réticulée. Cette réticulation est possible grâce à la présence du photo initiateur qui permet la réticulation de la composition lorsqu'elle est soumise à un rayonnement UV.

La quantité des différents éléments dans la composition varie en fonction de la dureté recherchée du produit final.

A titre d'exemple une composition A particulièrement adaptée à la réalisation d'un modèle de style, est composée :
- de 29 à 31% en poids d'une résine thermoplastique,
- de 29 à 31% en poids de monomères acryliques ou méthacryliques,
- de 29 à 31% en poids d'un plastifiant,
- de 9 à 11% en poids d'un agent épaississant, et
- de 0,05 à 0,3% d'un photo-initiateur.

De même, une composition B particulièrement adaptée à la réalisation d'un modèle de moule, est composée :
- de 37 à 39% en poids d'une résine thermoplastique,
- de 37 à 39% en poids de monomères acryliques ou méthacryliques,
- de 14 à 16% en poids d'un plastifiant,
- de 8 à 10% en poids d'un agent épaississant, et
- de 0,05 à 0,3% d'un photo-initiateur.

Enfin, un exemple de composition C thixotrope selon l'invention, adaptée pour la fabrication d'un moule, est composée :
- de 44 à 46% en poids d'une résine thermoplastique,
- de 44 à 46% en poids de monomères acryliques ou méthacryliques,
- de 5 à 7% en poids d'un plastifiant,
- de 3 à 5% en poids d'un agent épaississant, et
- de 0,05 à 0,3% d'un photo-initiateur.

Selon une variante particulièrement adaptée, le composition selon l'invention est constituée de 80% d'une composition A, B ou C et de 20% d'une résine polyuréthane.

La composition selon l'invention peut être utilisée pour la fabrication de pièces par usinage.

Le procédé de fabrication selon l'invention consiste à projeter la composition sur un support et à polymériser la composition à l'aide d'un rayonnement UV.

La projection de la composition peut être réalisée avec une machine de projection composée d'un plateau suiveur et d'un pistolet « air less » qui permet d'éclater la composition liquide en gouttelettes.

Le rayonnement UV peut être obtenu à partir de tubes du type néon émettant des U.V.A d'une longueur d'onde de 360 à 420 nanomètres. Afin d'obtenir une polymérisation rapide du produit, les rampes UV sont préférentiellement placées à vingt centimètres du produit projeté.

Le durcissement se fait en quelques minutes sous rayonnement UV et le produit adhère parfaitement sur lui-même. Il est ainsi possible d'appliquer plusieurs couches superposées en un minimum de temps si l'utilisateur souhaite obtenir des épaisseurs importantes.

Avantageusement la composition selon l'invention ne nécessite pas de mélange. La qualité du produit obtenu est reproductible. Elle ne dépend plus de la machine de transformation et du mélange des composants comme c'est le cas pour les compositions polyuréthane et époxyde.

Il n'y a plus aucune perte de produit liée à un redémarrage. Le produit étant projeté, il n'y a pas de bulle dans le produit final.

Selon un autre avantage, seul un écrêtage et un lustrage sont nécessaires après polymérisation pour obtenir la brillance du produit. La pulvérisation d'un enduit polyester n'est pas nécessaire.

En outre les réparations éventuelles peuvent être effectuées avec la même composition, par exemple appliquée à partir d'une cartouche en silicone qui contient cette composition et réticulée avec une lampe UV portative, en quelques minutes. Les opérations de réparation peuvent donc être réalisées très rapidement en intervenant directement sur la machine d'usinage sans entraîner de surcoût.

Les modèles, maître modèles ou moules obtenus selon l'invention peuvent servir dans tous les domaines, notamment l'automobile, le nautisme, l'éolien, l'aéronautique et le ferroviaire. Ils sont particulièrement adaptés pour la fabrication de modèles de moules de coques de bateaux.

## Revendications

1. Composition thixotrope destinée à la fabrication d'un modèle, d'un maître modèle ou d'un moule par usinage, comprenant au moins :
- une résine photopolymère, et
- un photo-initiateur,
ledit photo-initiateur étant présent à une concentration comprise entre 0,05 et 0,3% en poids de la composition,
**caractérisée en ce qu'**elle répond à l'une des trois compositions suivantes :
- composition composée :
* de 29 à 31% en poids d'une résine thermoplastique,
* de 29 à 31% en poids de monomères acryliques ou méthacryliques,
* de 29 à 31% en poids d'un plastifiant,
* de 9 à 11% en poids d'un agent épaississant, et
* de 0,05 à 0,3% d'un photo-initiateur,
- composition composée :
* de 37 à 39% en poids d'une résine thermoplastique,
* de 37 à 39% en poids de monomères acryliques ou méthacryliques,
* de 14 à 16% en poids d'un plastifiant,
* de 8 à 10% en poids d'un agent épaississant, et
* de 0,05 à 0,3% d'un photo-initiateur,
- composition composée :
* de 44 à 46% en poids d'une résine thermoplastique,
* de 44 à 46% en poids de monomères acryliques ou méthacryliques,
* de 5 à 7% en poids d'un plastifiant,
* de 3 à 5% en poids d'un agent épaississant, et
* de 0,05 à 0,3% d'un photo-initiateur.

2. Composition thixotrope, **caractérisée en ce qu'**elle est constituée de :
- 80% en poids, d'une composition selon la revendication 1, et
- 20% en poids, d'une résine polyuréthane.

3. Utilisation d'une composition thixotrope comprenant au moins :
- une résine photopolymère, et
- un photo-initiateur,
ledit photo-initiateur étant présent à une concentration comprise entre 0,05 et 0,3% en poids de la composition, pour la fabrication par usinage d'un modèle, d'un maître modèle ou d'un moule.

4. Utilisation selon la revendication 3, **caractérisée en ce que** la composition thixotrope est composée :
- d'une résine thermoplastique,
- d'au moins une résine ou un monomère acrylique ou méthacrylique,
- d'un plastifiant,
- d'un agent épaississant, et
- d'un photo-initiateur.

5. Utilisation selon la revendication 3 ou 4, **caractérisée en ce que** la composition thixotrope est une composition selon l'une des revendications 1 ou 2.

6. Procédé de fabrication par usinage d'un modèle, d'un maître modèle ou d'un moule, comprenant au moins une étape de projection d'une composition thixotrope comprenant au moins :
- une résine photopolymère, et
- un photo-initiateur,
ledit photo-initiateur étant présent à une concentration comprise entre 0,05 et 0,3% en poids de la composition,
sur un support, et une étape de polymérisation dudit produit à l'aide d'un rayonnement UV.

7. Procédé de fabrication par usinage d'un modèle, d'un maître modèle ou d'un moule selon la revendication 6, **caractérisée en ce que** la composition thixotrope est composée :
- d'une résine thermoplastique,
- d'au moins une résine ou un monomère acrylique ou méthacrylique,
- d'un plastifiant,
- d'un agent épaississant, et
- d'un photo-initiateur.

8. Procédé de fabrication par usinage d'un modèle, d'un maître modèle ou d'un moule selon la revendication 6 ou 7, **caractérisée en ce que** la composition thixotrope est une composition selon l'une des revendications 1 ou 2.

## Patentansprüche

1. Thixotrope Zusammensetzung für die Herstellung eines Modells, eines Grundmodells oder einer Form durch einen Verarbeitungsvorgang mit wenigstens:
- einem Photopolymerharz, und
- einem Photoinitiator,
wobei der Photoinitiator in einer Konzentration zwischen 0,05 und 0,3 Gew.-% der Zusammensetzung vorliegt,
**dadurch gekennzeichnet, dass** diese einer der drei Zusammensetzungen entspricht:
- Zusammensetzung zusammengesetzt aus:
* aus 29 bis 31 Gew.-% eines thermoplastischen Harzes,
* aus 29 bis 31 Gew.-% an acrylhaltigen oder metaacrylhaltigen Monomeren,
* aus 29 bis 31 Gew.-% eines Weichmachers,
* aus 9 bis 11 Gew.-% eines Verdickungsmittels, und
* aus 0,05 bis 0,3 Gew.-% eines Photoinitiators,
- Zusammensetzung zusammengesetzt aus:
* aus 37 bis 39 Gew.-% eines thermoplastischen Harzes,
* aus 37 bis 39 Gew.-% an acrylhaltigen oder metaacrylhaltigen Monomeren,
* aus 14 bis 16 Gew.-% eines Weichmachers,
* aus 8 bis 10 Gew.-% eines verdickungsmittels, und
* aus 0,05 bis 0, 3 Gew.-% eines Photoinitiators,
- Zusammensetzung zusammengesetzt aus:
* aus 44 bis 46 Gew.-% eines thermoplastischen Harzes,
* aus 44 bis 46 Gew.-% an acrylhaltigen oder metaacrylhaltigen Monomeren,
* aus 5 bis 7 Gew.-% eines Weichmachers,
* aus 3 bis 5 Gew. -% eines Verdickungsmittels, und
* aus 0,05 bis 0,3 Gew.-% eines Photoinitiators.

2. Thixotrope Zusammensetzung, **dadurch gekennzeichnet, dass** diese besteht aus:
- 80 Gew.-% einer Zusammensetzung nach Anspruch 1, und
- 20 Gew.-% eines Polyurethanharzes.

3. Verwendung einer thixotropen Zusammensetzung mit wenigstens:
- einem Photopolymerharz, und
- einem Photoinitiator,
wobei der Photoinitiator in einer Konzentration zwischen 0,05 und 0,3 Ges.-% der Zusammensetzung vorliegt, für die Herstellung eines Modells, eines Grundmodells oder einer Form durch einen Verarbeitungsvorgang.

4. Verwendung nach Anspruch 3, **dadurch gekennzeichnet, dass** die thixotrope Zusammensetzung zusammengesetzt ist aus:
- einem thermoplastischen Harz,
- wenigstens einem acrylhaltigen oder metaacrylhaltigen Harz oder Monomer,
- einem Weichmacher,
- einem Verdickungsmittel, und
- einem Photoinitiator.

5. Verwendung nach Anspruch 3 oder 4, **dadurch gekennzeichnet, dass** die thixotrope Zusammensetzung eine Zusammensetzung nach einem der Ansprüche 1 oder 2 ist.

6. Verfahren zur Herstellung eines Modells, eines Grundmodells oder einer Form durch einen Verarbeitungsvorgang, das wenigstens einen Spritzvorgang einer thixotropen Zusammensetzung aufweiset, mit wenigstens:
- einem Photopolymerharz, und
- einem Photoinitiator,
wobei der Photoinitiator in einer Konzentration zwischen 0,05 und 0,3 Gew.-% der Zusammensetzung vorliegt,
auf einer Halterung, und einem Polymerisationsvorgang des Produkts mithilfe von UV-Bestrahlung.

7. Verfahren zur Herstellung eines Modells, eines Grundmodelis oder einer Form durch einen Verarbeitungsvorgang nach Anspruch 6, **dadurch gekennzeichnet, dass** die thixotrope Zusammensetzung zusammengesetzt ist aus:
- einem thermoplastischen Harz
- wenigstens einem acrylhaltigen oder metaacrylhaltigen Harz oder Monomer,
- einem Weichmacher,
- einem Verdickungsmittel, und
- einem Photoinitiator.

8. Verfahren zur Herstellung eines Modells, eines Grundmodells oder einer Form durch einen Verarbeitungsvorgang nach Anspruch 6 oder 7, **dadurch gekennzeichnet, dass** die thixotrope Zusammensetzung eine Zusammensetzung nach einem der Ansprüche 1 oder 2 ist.

## Claims

1. A thixotropic composition intended for manufacturing a model, a master model or a mould by processing, comprising at least:
- a photopolymer resin, and
- a photoinitiator,
said photoinitiator being present at a concentration of between 0.05% and 0.3% by weight of the composition, **characterised in that** it complies with one of the following three compositions:
- composition composed of:
* 23% to 31% by weight of a thermoplastic resin,
* 29% to 31% by weight of acrylic or methacrylic monomers,
* 28% to 31% by weight of a plasticiser,
* 9% to 11% by weight of a thickening agent, and
* 0.05% to 0.3% of a photoinitiator,
- composition composed of:
* 37% to 39% by weight of a thermoplastic resin,
* 37% to 39% by weight of acrylic or methacrylic monomers,
* 14% to 16% by weight of a plasticiser,
* 8% to 10% by weight of a thickening agent, and
* 0.05% to 0.3% of a photoinitiator,
- composition composed of:
* 44% to 46% by weight of a thermoplastic resin,
* 44% to 46% by weight of acrylic or methacrylic monomers,
* 5% to 7% by weight of a plasticiser,
* 3% to 5% by weight of a thickening agent, and
* 0.05% to 0.3% of a photoinitiator.

2. A thixotropic composition, **characterised in that** it comprises:
- 80% by weight of a composition according to claim 1, and
- 20% by weight of a polyurethane resin.

3. Use of a thixotropic composition comprising at least:
- a photopolymer resin, and
- a photoinitiator,
said photoinitiator being present at a concentration of between 0.05% and 0.3% by weight of the composition, for manufacturing by processing a model, a master model, or a mould.

4. Use according to claim 3, **characterised in that** the thixotropic composition is composed of:
- a thermoplastic resin,
- at least one resin or one acrylic or methacrylic monomer,
- a plasticiser,
- a thickening agent, and
- a photoinitiator.

5. Use according to claim 3 or 4, **characterised in that** the thixotropic composition is a composition according to one of claims 1 or 2.

6. A method for manufacturing by processing a model, a master model or a mould, comprising at least one steep of spraying a thixotropic composition comprising at least:
- a photopolymer resin, and
- a photoinitiator,
said photoinitiator being present at a concentration of between 0.05% and 0.3% by weight of the composition,
on a support, and a step of polymerising said product by means of UV radiation.

7. A method for manufacturing by processing a model, a master model or a mould according to claim 6, **characterised in that** the thixotropic composition comprises:
- a thermoplastic resin,
- at least one resin or one acrylic or methacrylic monomer,
- a plasticiser,
- a thickening agent, and
- a photoinitiator.

8. A method for manufacturing by processing a model, a master model or a mould according to claim 6 or 7, **characterised in that** the thixotropic composition is a composition according to one of claims 1 or 2.
